# EUROPÄISCHE PATENTSCHRIFT

(11) **EP 1 963 121 B1**
(45) Veröffentlichungstag und Bekanntmachung des Hinweises auf die Patenterteilung: **09.12.2009**
(21) Anmeldenummer: 06705932.9
(22) Anmeldetag: 07.02.2006
(51) Int. Cl.: B60J 7/12

(54) **FAHRZEUGDACH UND FAHRZEUG MIT EINEM FAHRZEUGDACH**
VEHICLE ROOF AND VEHICLE COMPRISING SAID VEHICLE ROOF
TOIT DE VEHICULE ET VEHICULE COMPORTANT UN TEL TOIT

(30) Priorität: 19.12.2005 WO PCT/DE2005/002286
(43) Veröffentlichungstag der Anmeldung: 03.09.2008
(73) Patentinhaber: Webasto AG, 82131 Stockdorf (DE)
(72) Erfinder: RIGHETTI, Claudio, Ivano, I-10129 Torino (IT)
(74) Vertreter: Schumacher & Willsau
(86) Internationale Anmeldenummer: PCT/DE2006/000206
(87) Internationale Veröffentlichungsnummer: WO 2007/071214

(56) Entgegenhaltungen:
- DE-A1- 4 040 249

## Beschreibung

Die Erfindung betrifft ein Fahrzeugdach, welches das zumindest teilweise Freilegen eines Fahrzeuginsassenraumes ermöglicht, mit einem Grundgerüst, welches das Fahrzeugdach zumindest abschnittsweise ausbildet und die Kontur des Fahrzeugdaches im geschlossenen Zustand definiert, wobei das Grundgerüst zumindest einen Gelenkabschnitt aufweist, um den ein zu öffnender Teil des Fahrzeugdaches umklappbar ist.

Darüber hinaus betrifft die Erfindung ein Fahrzeug mit einem solchen Fahrzeugdach.

Aus der DE 40 40 249 C2 ist ein Fahrzeugdach bekannt, welches ermöglicht, einen Fahrzeuginsassenraum zumindest abschnittsweise freizulegen, indem ein zu öffnender Dachabschnitt nach hinten umklappbar ist. Dieses Fahrzeugdach besteht aus einem starren mit Gelenken versehenen Dachrahmen, der mit einem Stoffbezug gespannt ist. Bei diesem Fahrzeugdach besteht insbesondere der Dachrahmen aus sehr vielen Einzelteilen, die in aufwendigen Arbeitsschritten montiert werden müssen.

Es ist daher die Aufgabe der vorliegenden Erfindung das gattungsgemäße Fahrzeugdach und das gattungsgemäße Fahrzeug mit einer einfacher aufgebauten Dachkonstruktion auszustatten.

Diese Aufgabe wird durch die Merkmale der unabhängigen Ansprüche gelöst.

Vorteilhafte Ausgestaltungen und Weiterbildungen der Erfindung ergeben sich aus den abhängigen Ansprüchen.

Das erfindungsgemäße Fahrzeugdach baut auf dem gattungsgemäßen Stand der Technik dadurch auf, dass der Gelenkabschnitt ein Abschnitt ist, an dem das Grundgerüst eine höhere Biegsamkeit als dem Gelenkabschnitt benachbarte Abschnitte aufweist. Durch dieses Fahrzeugdach kann auf Scharniergelenke verzichtet werden, wodurch ein sehr einfach aufgebautes Fahrzeugdach mit völlig neuartigem Erscheinungsbild realisiert werden kann.

Das erfindungsgemäße Fahrzeugdach kann in vorteilhafter Weise dadurch weitergebildet sein, dass das Grundgerüst durch in Längsrichtung verlaufende, einstückige Grundträger ausgebildet wird. Dieses Fahrzeugdach mit einstückigen Grundträgern ist eine äußerst kompakte Weiterbildung, welche ermöglicht, dass das Grundgerüst samt Gelenkabschnitt aus einem Material und somit mit wenigen Arbeitsschritten herstellbar ist.

Bei einer bevorzugten Ausführungsform des erfindungsgemäßen Fahrzeugdaches ist weiterhin vorgesehen, dass die höhere Biegsamkeit des Gelenkabschnittes durch quer zur Längsrichtung des Fahrzeugdaches verlaufende und dem Fahrzeuginsassenraum zugewandte Einkerbungen bereitgestellt wird. Diese Weiterbildung ermöglicht, dass das Grundgerüst durchgängig mit konstanter Materialstärke ausgebildet und anschließend die Biegsamkeit an den Gelenkabschnitten durch Einbringen der Einkerbungen an den gewünschten Stellen genau eingestellt werden kann.

Darüber hinaus kann das erfindungsgemäße Fahrzeugdach derart weitergebildet sein, dass zwei Gelenkabschnitte vorgesehen sind, wobei sich ein Gelenkabschnitt zwischen einem Oberdach und einem Dachheck, an dem eine Heckscheibe anbringbar ist, und der andere Gelenkabschnitt unterhalb eines Bereichs, an dem die Heckscheibe anbringbar ist, befindet. Durch Vorsehen von zwei Gelenkabschnitten kann eine Außenkontur des Fahrzeugdaches erreicht werden, die der von bisherigen Fahrzeugdächern entspricht und ohne drehbar gelagertes Metallstangengrundgerüst auskommt, das bei bisherigen Cabriodächern die Außenkontur definierte.

Des Weiteren kann das erfindungsgemäße Fahrzeugdach so weitergebildet sein, dass zusätzlich zum Grundgerüst eine Dachschicht vorgesehen ist, die eine geringere Steifigkeit als das Grundgerüst aufweist. Durch diese zusätzliche Dachschicht kann ein optimiertes Verhältnis aus Steifigkeit und Gewicht des Fahrzeugdaches erzielt werden. Dabei definiert das Grundgerüst die Außenkontur des Fahrzeugdaches und dient zur Umsetzung der Kinematik, wohingegen die zusätzliche Dachschicht kaum zur Stabilität des Fahrzeugdaches beiträgt, sondern mit geringem Gewicht vom Grundgerüst zurückbleibende Zwischenabschnitte schließt oder die komplette Kontur des Fahrzeugdaches abdeckt.

Das erfindungsgemäße Fahrzeugdach kann außerdem dadurch ausgebildet werden, dass das Fahrzeugdach am Gelenkabschnitt derart umgeklappt werden kann, dass in der geöffneten Stellung das Fahrzeugdach ungefaltet auf dem Fahrzeugheck abzulegen ist. Dadurch ist kein Stauraum für ein zusammengefaltetes oder zusammengeklapptes Fahrzeugdach erforderlich. Damit steht der gesamte Kofferraum als Stauraum für mitgeführtes Gepäck zur Verfügung.

Weiterhin kann das Fahrzeugdach so ausgebildet sein, dass das Fahrzeugdach in Längsrichtung in zwei Abschnitte geteilt ist. Somit ist wahlweise nur die rechte oder linke Hälfte des Fahrzeuginsassenraums freilegbar, wodurch eine völlig neuartige Cabriobauart geschaffen ist.

Des Weiteren kann das Fahrzeugdach gemäß einer Ausführungsform der Erfindung so ausgebildet sein, dass ein weiterer Gelenkabschnitt vorgesehen ist, um das geöffnete Fahrzeugdach abschnittsweise in Fahrzeuglängsrichtung nach vorn umzuklappen. Dadurch erzielt man die Vorteile, dass die Länge des geöffneten Fahrzeugdaches verringert wird und sich somit im geöffneten Zustand ein kompakteres, zusammengeklapptes Fahrzeugdach ergibt. Durch die verkürzte Länge ist das erfindungsgemäße Konzept auch bei Fahrzeugen anwendbar, die insgesamt sehr kurz sind oder die ein sehr kurzes Fahrzeugheck aufweisen. Die Innenfläche des Fahrzeugdaches (die Fläche, die im geschlossenen Zustand dem Fahrzeuginsassenraum zugewandt ist), ist im geöffneten Zustand in einer geschützten Weise auf dem Fahrzeugheck abgelegt, so dass diese Innenfläche weniger Schmutz, Staub, Abgasen, Sonneneinstrahlung, Regen, usw. ausgesetzt ist. Eine Abdeckung, welche das geöffnete Fahrzeugdach abdeckt, könnte somit entbehrlich werden.

Für das erfindungsgemäße Fahrzeug mit dem erfindungsgemäßen Fahrzeugdach ergeben sich die vorstehend genannten Vorteile in übertragener Weise.

Eine bevorzugte Ausführungsform der Erfindung wird nachfolgend anhand der Figuren beispielhaft erläutert.

Es zeigen:
- Figuren 1A-1D: schematische, räumliche Veranschaulichungen des erfindungsgemäßen Fahrzeugdaches in ver- schiedenen Stellungen gemäß einem ersten Ausführungsbeispiel;
- Figur 2: eine zweidimensionale Ansicht des Fahrzeug- daches von unten gemäß dem ersten Ausfüh- rungsbeispiel;
- Figur 3: einen Schnitt des Fahrzeugdaches entlang der Linie I-I aus Figur 2;
- Figur 4: eine räumliche Veranschaulichung des erfin- dungsgemäßen Fahrzeugdaches gemäß dem ersten Ausführungsbeispiel im vollständig geschlos- senen Zustand, und eine Seitenansicht eines Schnittes in Fahrzeuglängsrichtung, der ein Detail der räumlichen Darstellung veran- schaulicht;
- Figur 5: eine räumliche Veranschaulichung des erfin- dungsgemäßen Fahrzeugdaches gemäß dem ersten Ausführungsbeispiel, in einem Zustand, in dem eine rechte Hälfte des Fahrzeugdaches vollständig geöffnet und die linke Hälfte des Fahrzeugdaches vollständig geschlossen ist, und eine Seitenansicht eines Schnittes in Fahrzeuglängsrichtung der ein Detail der räumlichen Darstellung veranschaulicht;
- Figur 6: eine Draufsicht des erfindungsgemäßen Fahr- zeugdaches gemäß einem zweiten Ausführungs- beispiel, in einem Zustand, in dem eine Hälfte des Fahrzeugdaches im geöffneten Zu- stand nach vorn geklappt ist;
- Figur 7: eine Draufsicht des erfindungsgemäßen Fahr- zeugdaches gemäß dem zweiten Ausführungsbei- spiel, in einem Zustand, in dem beide Hälf- ten des Fahrzeugdaches im geöffneten Zustand nach vorn geklappt sind;
- Figur 8: einen Schnitt der rechten Fahrzeugdachhälfte im Bereich eines dritten Gelenkabschnittes gemäß dem zweiten Ausführungsbeispiel.

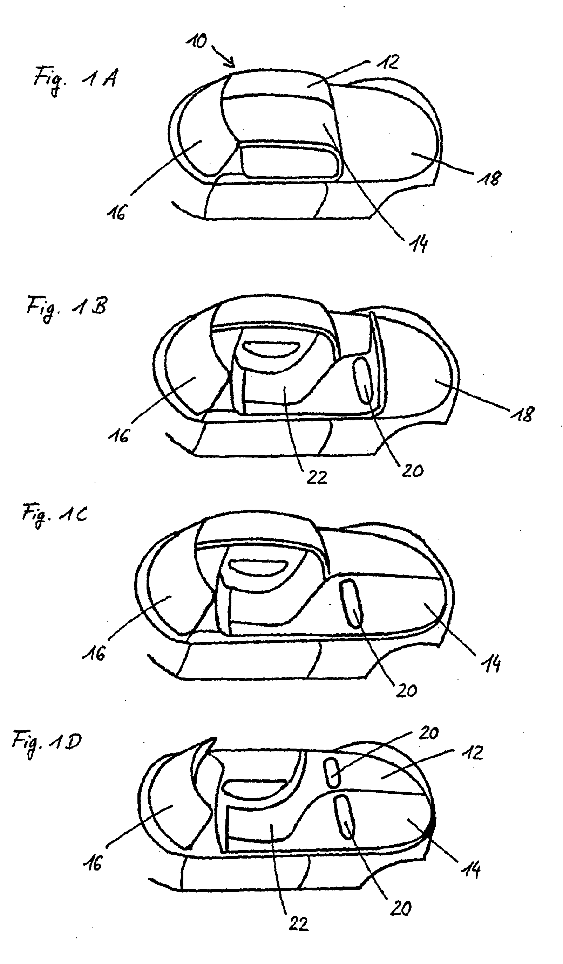

Die Figuren 1A - 1D zeigen schematische, räumliche Veranschaulichungen des erfindungsgemäßen Fahrzeugdaches in verschiedenen Stellungen gemäß einem ersten Ausführungsbeispiel. Das Fahrzeugdach 10 umfasst im vorliegenden Ausführungsbeispiel eine rechte Fahrzeugdachhälfte 12 und eine linke Fahrzeugdachhälfte 14. Richtungsangaben wie "vorn", "hinten", "rechts" und "links" beziehen sich auf die Längsrichtung des Fahrzeugs bzw. des Fahrzeugdaches, wobei "vorn" der linken Seite der Figuren 1A - 1D und "rechts" oben in den Figuren 1A - 1D entspricht. Das Fahrzeugdach 10 deckt im geschlossenen Zustand einen Fahrzeuginsassenraum zwischen einer Windschutzscheibe 16 und einem Fahrzeugheck 18 ab. In dem Fahrzeugheck 18 ist gewöhnlicher Weise der Kofferraum untergebracht. Die Form des Fahrzeugdaches 10 ist im Wesentlichen derart, dass sich ein Oberdach von der Oberkante der Windschutzscheibe 16 im Wesentlichen eben zum Fahrzeugheck erstreckt und sich hinter der Position, wo sich gewöhnlich die Köpfe der Insassen befinden, nach unten erstreckt, wobei der sich nach unten erstreckende Teil ein Dachheck ausbildet, in dem Heckscheiben 20 eingebracht sind. Dabei ist je eine Heckscheibe 20 in einer Hälfte des Dachhecks ausgebildet. Wie aus den Figuren 1B - 1D ersichtlich, ist im vorliegenden Ausführungsbeispiel das Fahrzeugdach einstückig mit Sitzschalen 22 ausgebildet. Dadurch kann das Fahrzeugdach 10 einstückig mit den Sitzschalen 22 hergestellt werden, was die Herstellungsschritte stark minimiert. Im geschlossenen Zustand, der in Figur 1A dargestellt ist, ist das Fahrzeugdach 10 mit einem nicht dargestellten Verriegelungsmechanismus an die Oberkante eines die Windschutzscheibe 16 umgebenden Windschutzscheibenrahmens fixiert. Der Verriegelungsmechanismus ist bevorzugter Weise eine Standardverriegelung die an der Vorderkante des Fahrzeugdaches 10 ausgebildet ist mit einer entsprechenden Einklinkvorkehrung an der Oberkante des Windschutzscheibenrahmens.

Zum Öffnen der linken Fahrzeugdachhälfte 14 wird der Verriegelungsmechanismus, der die Fahrzeugdachhälfte 14 mit dem die Windschutzscheibe 16 umgebenden Windschutzscheibenrahmen verbindet, gelöst. Anschließend wird die Fahrzeugdachhälfte 14 zum Fahrzeugheck 18 bewegt, wodurch sich die Fahrzeugdachhälfte 14 um einen ersten Gelenkabschnitt 24 (wird später erläutert) biegt, so dass sich das Dachheck auf das Fahrzeugheck 18 ablegt und das Oberdach nach oben aufgestellt wird. Dieser Zustand ist in Figur 1B dargestellt. Wenn das Oberdach weiter nach hinten bewegt wird, biegt sich das Oberdach um einen zweiten Gelenkabschnitt 26, wodurch sich auch das Oberdach auf das Fahrzeugheck 18 ablegt. Dieser Zustand ist in Figur 1C dargestellt. Durch diese Zweiteilung des Fahrzeugdaches 10 in Längsrichtung wird ermöglicht, dass nur eine Hälfte des Fahrzeuginsassenraumes geöffnet wird. Dies kann wahlweise die rechte oder linke Hälfte des Fahrzeuginsassenraumes sein, wobei in Figur 1C die Öffnung der linken Hälfte des Fahrzeuginsassenraumes dargestellt ist. Soll auch die rechte Fahrzeugdachhälfte 12 geöffnet werden, wird diese analog zum vorstehend beschriebenen Prozess geöffnet, wodurch der in Figur 1D dargestellte, vollständig geöffnete Zustand des Fahrzeugdaches 10 erzielt wird. Im geöffneten Zustand wird das auf dem Fahrzeugheck 18 aufliegende Fahrzeugdach 10 durch sein Eigengewicht auf dem Fahrzeugheck 18 aufliegend gehalten. Zusätzlich kann das Fahrzeugdach 10 mittels Permanentmagneten, die sowohl im Fahrzeugdach 10 als auch im Fahrzeugheck 18 gegenüberliegend zueinander eingebettet sind, auf dem Fahrzeugheck 18 gehalten werden, so dass das Fahrzeugdach 10 im geöffneten Zustand, der in Figur 1D dargestellt ist, mittels Magnetkraft auf dem Fahrzeugheck 18 fixiert ist. Anstatt dessen können ebenso im Fahrzeugdach 10 Permanentmagneten und im Fahrzeugheck 18 Elektromagneten integriert sein, die das Fahrzeugdach 10 im geöffneten Zustand wahlweise auf dem Fahrzeugheck 18 fixieren oder freigeben. Alternativ zu einer magnetischen Kopplung kann ebenso eine andere Verriegelung vorgesehen sein, die ermöglicht, dass das geöffnete Fahrzeugdach 10 auch bei höheren Geschwindigkeiten des Fahrzeugs plan auf dem Fahrzeugheck 18 aufliegt und nicht flattert, was unangenehme Fahrgeräusche zur Folge hätte. Im vorliegenden Ausführungsbeispiel wird das auf de Fahrzeugheck 18 aufliegende Fahrzeugdach 10 mittels seines Eigengewichtes auf dem Fahrzeugheck 18 gehalten. Im geöffneten Zustand des Fahrzeugdaches 10 ist die dem freien Himmel zugewandte Seite des Fahrzeugdaches 10 jene Seite, die im geschlossenen Zustand des Fahrzeugdaches 10 dem Fahrzeuginsassenraum zugewandt ist. Daher ist das Fahrzeugdach 10 bevorzugter Weise beidseitig aus witterungsbeständigem Material ausgebildet, da je nach geöffneter oder geschlossener Stellung die eine oder andere Seite des Fahrzeugdaches 10 Regen oder Sonne ausgesetzt sein kann. Alternativ kann die Innenfläche des Fahrzeugdaches 10 (Fläche, die im geschlossenen Zustand dem Fahrzeuginsassenraum zugewandt ist) mit Stoff, Leder usw. versehen sein, wobei diese Innenfläche im geöffneten Zustand des Fahrzeugdaches 10 mit einer Abdeckung überspannt wird. Da im geöffneten Zustand des Fahrzeugdaches 10 jene Seite des Fahrzeugdaches 10 dem freien Himmel zugewandt ist, die im geschlossenen Zustand des Fahrzeugdaches 10 dem Fahrzeuginsassenraum zugewandt ist, sind die Verriegelungen, mit denen das Fahrzeugdach 10 am Windschutzscheibenrahmen befestigt wird, möglichst bündig zur Außenkontur des Fahrzeugdaches anzubringen, so dass im geöffneten Zustand des Fahrzeugdaches 10 eine schöne gleichmäßige Außenkontur am Fahrzeugheck 18 erzielt werden kann.

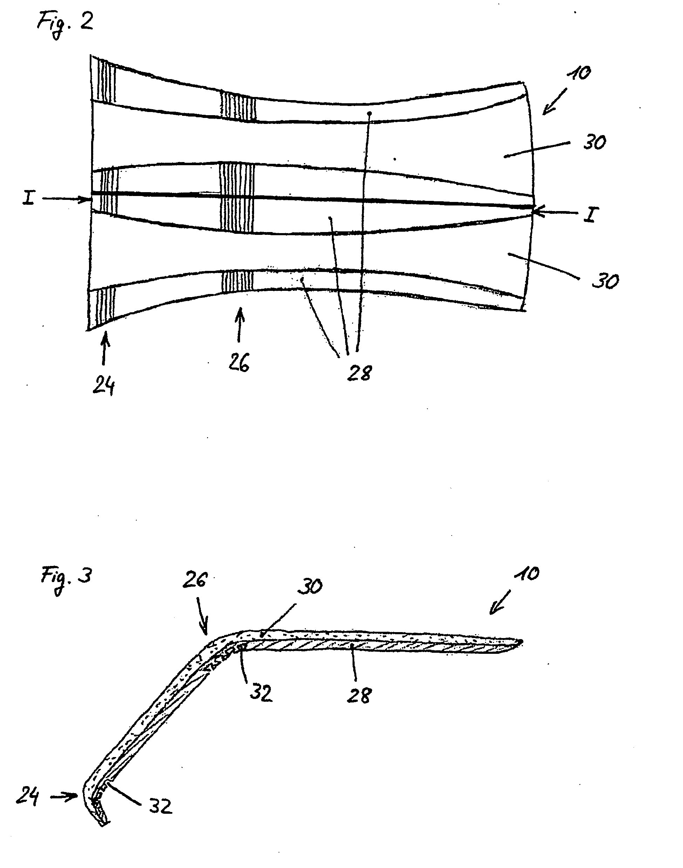

Figur 2 zeigt eine zweidimensionale Ansicht des Fahrzeugdaches von unten gemäß einem ersten Ausführungsbeispiel. Das Fahrzeugdach 10 umfasst im Wesentlichen ein Grundgerüst, welches drei einstückig ausgebildete Grundträger 28 aufweist. Die Grundträger 28 verlaufen im Wesentlichen in Fahrzeuglängsrichtung von der Oberkante des die Windschutzscheibe 16 umgebenden Windschutzscheibenrahmens (rechts in Figur 2) bis zur Vorderkante des Fahrzeughecks 18 (links in Figur 2). Dabei wird das Fahrzeugdach 10 rechts- und linksseitig (unten und oben in Figur 2) von jeweils einem Grundträger 28 begrenzt, die so ausgestaltet sind, dass sie wie in Figur 2 dargestellt im mittleren Bereich zueinander gekrümmt sind. Die verbleibenden zwei der vier Grundträger 28 sind angrenzend zueinander in der Mitte (bezüglich der rechten und linken Seite des Fahrzeugs) verlaufend angeordnet. Dabei wird zwischen den mittleren Grundträgern und den äußeren Grundträgern jeweils ein Zwischenraum ausgebildet, der sich auf Grund der Form der Grundträger 28 in Figur 2 von rechts nach links bis zur Mitte zunächst verengt und dann wieder aufweitet. Im montierten Zustand des Fahrzeugdaches 10 werden die Grundträger 28 mit einer zusätzlichen Dachschicht 30 abgedeckt, so dass diese Dachschicht 30 sowohl eine Seite der Grundträger 28 als auch die Zwischenräume 30 überspannt. Die Grundträger 28 sind in einem Bereich, der sich im montierten Zustand des Fahrzeugdaches 10 zwischen den Kopfstützen 34 der Fahrzeugsitze und der Vorderkante 36 des Fahrzeughecks 18 befindet, mit einem ersten Gelenkabschnitt 24 versehen. Darüber hinaus sind die Grundträger 28 in einem Bereich zwischen Oberdach und Dachheck mit einem zweiten Gelenkabschnitt 26 versehen. Die Gelenkabschnitte 24 und 26 können auf verschiedene Weise umgesetzt werden. Zum einen können, die Grundträger 28 an diesen Abschnitten mit geringerer Materialstärke ausgebildet werden, so dass sie an diesen Gelenkabschnitten 24, 26 eine höhere Biegsamkeit bzw. eine niedrigere Steifigkeit aufweisen. Darüber hinaus können die Gelenkabschnitte 24, 26 umgesetzt werden, indem an diesen Stellen die Grundträger 28 aus einem anderen Material hergestellt sind, welches eine höhere Biegsamkeit aufweist. Dieses Material höherer Biegsamkeit ist einstückig mit den benachbarten Abschnitten der Grundträger 28 verbunden. Die Grundträger 28 können außerdem aus einem Verbundmaterial mit unterschiedlicher Dichte hergestellt werden, wobei die Grundträger 28 an den Gelenkabschnitten 24, 26 eine geringere Dichte aufweisen. Dabei ist Wesentlich, dass durch Kombination flexibler und steifer Abschnitte/Materialien, oder anders ausgedrückt durch Kombination von Abschnitten/Materialien mit unterschiedlicher Biegsamkeit/Steifigkeit das Umklappen des Fahrzeugdaches 10 ermöglicht wird ohne Scharniergelenke vorzusehen. In diesem Ausführungsbeispiel werden die Gelenkschabschnitte 24 und 26 jedoch bevorzugter Weise durch in Querrichtung zur Fahrzeuglängsrichtung verlaufende Einkerbungen 32 ausgebildet, wobei durch diese Einkerbungen 32 den Grundträgern 28 an den Gelenkabschnitten 24 und 26 eine höhere Biegsamkeit verliehen wird. Die Grundträger 28 werden bevorzugter Weise einstückig aus ein und demselben Verbundmaterial hergestellt. Im Bereich des Oberdachs und des Dachhecks weisen diese Grundträger 28 eine möglichst hohe Steifigkeit auf, um die Außenkontur des Fahrzeugdaches 10 zu definieren und ein möglichst stabiles Fahrzeugdach 10 zu verwirklichen. Die Steifigkeit der Grundträger 28 in den vorstehend genannten Bereichen sollte allerdings so gewählt werden, dass sich das Fahrzeugdach 10 im geöffneten Zustand, in dem das Fahrzeugdach 10 auf dem Fahrzeugheck 18 aufliegt, der Außenkontur des Fahrzeughecks 18 gut anpassen kann. Die Grundträger 28 bestimmen dabei im geschlossenen Zustand des Fahrzeugdaches 10 die exakte Position des Fahrzeugdaches 10 und eine korrekte Gesamtsteifigkeit des kompletten Systems, wenn das Fahrzeugdach geschlossen ist. Dadurch, dass die Grundträger 28 mit den Gelenkabschnitten 24 und 26 versehen sind, bestimmen diese Grundträger 28 auch die Kinematik und die korrekte Bewegung des Fahrzeugdaches 10 während des Öffnens und Schließens. Auf Grund dessen, dass das Fahrzeugdach 10 im geschlossenen Zustand eine möglichst hohe Steifigkeit aufweisen soll und sich im geöffneten Zustand möglichst gut der Kontur des Fahrzeugshecks 18 anpassen soll, kann ein Material für die Grundträger 28 ausgewählt werden, welches bei Biegung in einer Richtung eine höhere Steifigkeit aufweist als bei Biegung in die entgegengesetzte Richtung. Mit anderen Worten, dass sich das Oberdach im geschlossenen Zustand des Fahrzeugdaches 10 möglichst wenig nach unten durchbiegt und im geöffneten Zustand, bei dem das Fahrzeugdach 10 in die entgegengesetzte Richtung durchgebogen wird und der Schwerkraft in die entgegengesetzte Richtung ausgesetzt ist, sich leichter durchbiegen lässt. In den Figuren 1A bis 1D wurde erwähnt, dass das Fahrzeugdach 10 einstückig mit den Sitzschalen 22 ausgebildet ist. Das Fahrzeugdach 10 kann jedoch auch separat von den Fahrzeugsitzen 22 ausgebildet sein. Ein solches Fahrzeugdach 10 wird zwischen der Vorderkante 36 des Fahrzeughecks 18 und den Kopfstützen 34 der Fahrzeugsitze mit der Fahrzeugkarosserie verbunden. Dabei ist der erste Gelenkabschnitt 24 in Querrichtung des Fahrzeugs parallel zur Befestigungslinie mit der Karosserie ausgebildet. Die Dachschicht 30 ist aus einem Material hoher Flexibilität und geringer Materialstärke, da dieses Material kaum zur Steifigkeit des Fahrzeugdaches beiträgt, sondern eher die Funktion hat, den Fahrzeuginsassenraum von der Fahrzeugumgebung zu trennen. Das Material für die Dachschicht 30 ist bevorzugter Weise ein imprägniertes Stoffgewebe, kann aber ebenso ein Plastikmaterial oder Verbundmaterial sein. Darüber hinaus kann das Fahrzeugdach 10 alternativ zu dem vorstehend beschriebenen Aufbau auch so ausgebildet sein, dass die Fahrzeugdachhälften 12 und 14 jeweils einstückig sind, d.h. Grundträger 28 und Dachschicht 30 der Fahrzeugdachhälften 12 und 14 sind einstückig. Bei dieser Alternative können die Fahrzeugdachhälften 12 und 14 zudem vollständig aus dem gleichen Material sein, wobei im Bereich der Grundträger 28 das Material eine deutlich höhere Materialstärke aufweist und dadurch die Funktion der Grundträger 28 übernimmt. Außerdem kann das komplette Fahrzeugdach 10 einstückig ausgebildet sein.

Figur 3 zeigt einen Schnitt des Fahrzeugdaches entlang der Linie I-I aus Figur 2. Diese Schnittdarstellung stellt einen geschlossen Zustand des Fahrzeugdaches 10 dar. Dabei wird der Grundträger 28 auf der dem Fahrzeuginsassenraum abgewandten Seite von der Dachschicht 30 bedeckt. Alternativ dazu kann jedoch die Dachschicht 30 ebenso auf der Fahrzeuginsassenraum zugewandten Seite angebracht sein oder die Dachschicht 30 kann nur den Zwischenraum, der zwischen den Grundträgern 28 ausgebildet wird, bespannen. Somit sind die Grundträger 28 je nach Anbringung der Dachschicht 30 wahlweise sichtbar oder nicht. Wie in Figur 3 dargestellt, werden der erste und zweite Gelenkabschnitt 24 und 26 dadurch ausgebildet, dass der Grundträger 28 mit Einkerbungen 32 versehen ist, die in Querrichtung zur Längsrichtung des Fahrzeugs und auf der dem Fahrzeuginsassenraum zugewandten Seite (im geschlossenen Zustand des Fahrzeugdaches 10) ausgebildet sind. Durch derartiges Einschneiden von Einkerbungen 32 kann der Grundträger 28 zunächst mit konstanter Materialstärke und aus dem gleichen Material ausgebildet werden, wobei anschließend der Grundträger 28 im Bereich des ersten und zweiten Gelenkabschnittes 24 und 26 durch das Einbringen der in Querrichtung verlaufenden Einkerbungen 32 mit höherer Biegsamkeit als die den Gelenkabschnitten 24 und 26 benachbarten Abschnitte versehen wird. Durch Auswählen der Tiefe und Breite der Einkerbungen 32 lässt sich die Biegsamkeit genau einstellen. Dabei wird mit größeren Einkerbungen 32 die Biegsamkeit in diesen Bereichen höher bzw. die Steifigkeit geringer.

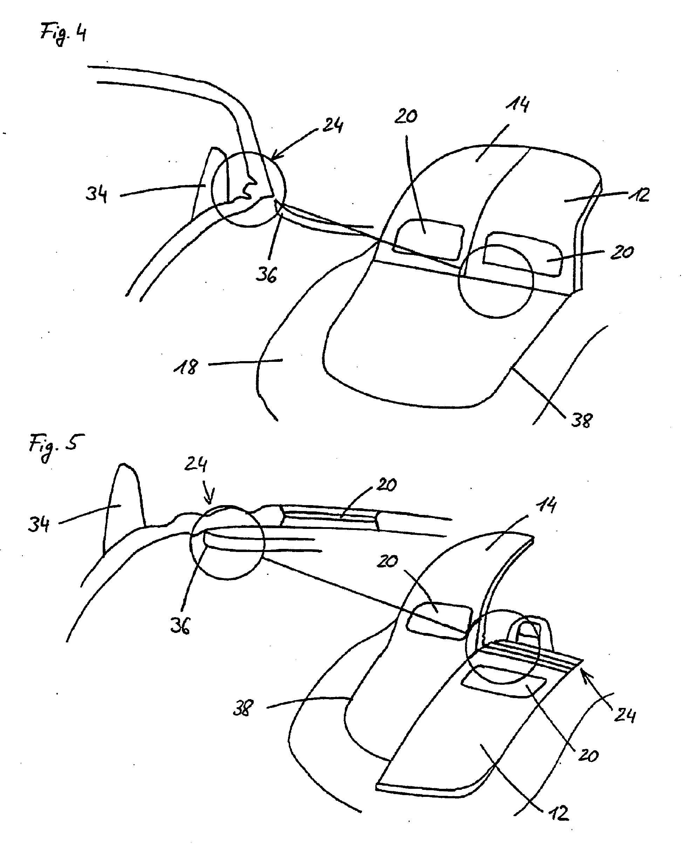

Figur 4 zeigt eine räumliche Veranschaulichung des erfindungsgemäßen Fahrzeugdaches gemäß dem ersten Ausführungsbeispiel im vollständig geschlossenen Zustand, und eine Seitenansicht eines Schnittes in Fahrzeuglängsrichtung, der ein Detail der räumlichen Darstellung veranschaulicht. Hierbei ist noch einmal das vorstehend beschriebene Fahrzeugdach 10 im am Fahrzeug montierten Zustand dargestellt. Wie in der Schnittansicht der Figur 4 zu erkennen, ist das Fahrzeugdach 10 im Bereich des Gelenkabschnittes 24 und auf der der Vorderkante 36 des Fahrzeughecks 18 zugewandten Seite, mit einem Vorsprung versehen, der einen kleinen Zwischenraum zwischen Fahrzeugdach 10 und Vorderkante 36 möglichst gut verschließt und somit vor Eindringen von Verschmutzungen schützt. Ein Bereich 38 des Fahrzeughecks 18, auf dem das geöffnete Fahrzeugdach 10 abschnittsweise zum Liegen kommt, ist gegenüber dem umgebenden Fahrzeugheck 18 leicht versenkt und steigt nach hinten wieder aus der Absenkung an.

Figur 5 zeigt eine räumliche Veranschaulichung des erfindungsgemäßen Fahrzeugdaches gemäß dem ersten Ausführungsbeispiel, in einem Zustand, in dem eine rechte Hälfte des Fahrzeugdaches vollständig geöffnet und die linke Hälfte des Fahrzeugdaches vollständig geschlossen ist, und eine Seitenansicht eines Schnittes in Fahrzeuglängsrichtung der ein Detail der räumlichen Darstellung veranschaulicht. Wie aus Figur 5 erkennbar ist, steht ein hinterer Abschnitt des geöffneten Fahrzeugdaches 10 über den Bereich 38 nach hinten hervor. In die Kante des Fahrzeugdaches 10, welche im geöffneten Zustand nach hinten gerichtet ist, ist ein Rücklicht aus steifem Material eingearbeitet, das aus Hartplastik oder Glas bestehen kann. Bei einem zweigeteilten Fahrzeugdach 10, ist auch dieses Rücklicht zweigeteilt.

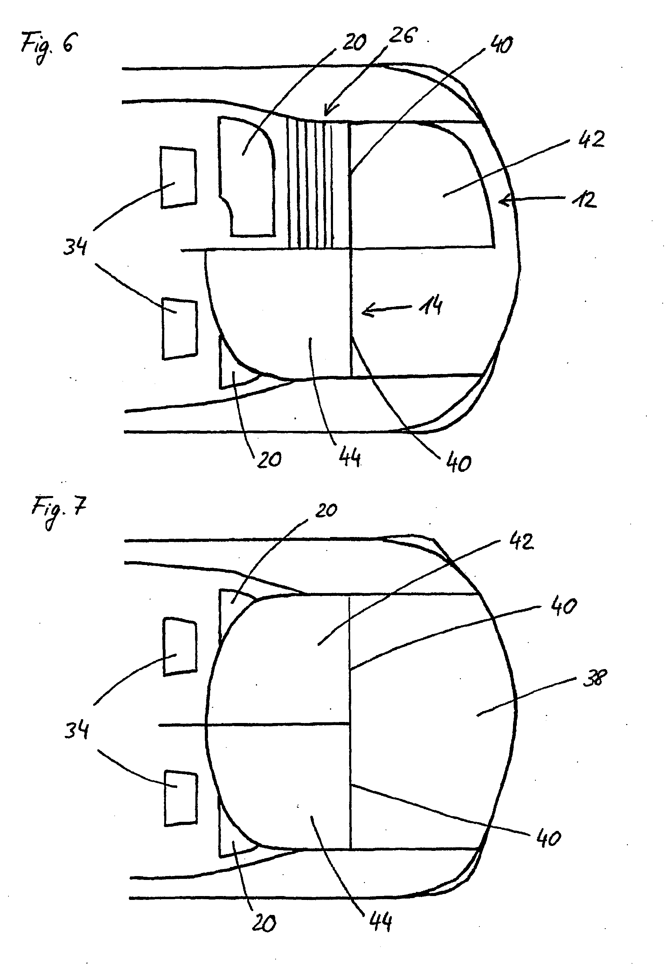

Figur 6 zeigt eine Draufsicht des erfindungsgemäßen Fahrzeugdaches 10 gemäß einem zweiten Ausführungsbeispiel, in einem Zustand, in dem eine Hälfte des Fahrzeugdaches 10 im geöffneten Zustand nach vorn geklappt ist. Das zweite Ausführungsbeispiel unterscheidet sich vorn ersten Ausführungsbeispiel dadurch, dass zusätzlich zu den Elementen des ersten Ausführungsbeispiels an den Fahrzeugdachhälften 12, 14 ein dritter Gelenkabschnitt 40 vorgesehen ist. Der dritte Gelenkabschnitt 40 ist zwischen dem zweiten Gelenkabschnitt 26 und der Vorderkante des Fahrzeugdaches 10 (Kante, die im geschlossenen Zustand des Fahrzeugdaches 10 vorn ist) angeordnet. Der dritte Gelenkabschnitt 40 verläuft parallel zum ersten und zweiten Gelenkabschnitt 24, 26, vorzugsweise mit im Wesentlichen gleichem Abstand zum ersten Gelenkabschnitt 24 und zur Vorderkante des Fahrzeugdaches 10. Dabei kann der dritte Gelenkabschnitt 40 ähnlich wie die Gelenkabschnitte 24 und 26 auf verschiedene Weisen realisiert werden. Zum einen können, die Grundträger 28 an diesem Abschnitt mit geringerer Materialstärke ausgebildet werden, so dass sie am dritten Gelenkabschnitt 40 eine höhere Biegsamkeit bzw. eine niedrigere Steifigkeit aufweisen. Darüber hinaus kann der Gelenkabschnitt 40 realisiert werden, indem an dieser Stelle der Grundträger 28 aus einem anderen Material hergestellt ist, welches eine höhere Biegsamkeit aufweist. Dieses Material höherer Biegsamkeit ist einstückig mit den benachbarten Abschnitten des Grundträgers 28 verbunden. Alternativ ist auch ein Scharnier denkbar. Ebenso kann der dritte Gelenkabschnitt 40, wie der erste und zweite Gelenkabschnitt 24 und 26, durch Einbringen einer Einkerbung 32 ausgebildet werden. Im geöffneten Zustand einer Fahrzeugdachhälfte 12, 14 kann ein jeweiliger Umklappabschnitt 42, 44 der Fahrzeugdachhälften 12, 14 in Fahrzeuglängsrichtung um den dritten Gelenkabschnitt 40 drehend nach vorn umgeklappt werden. Die Umklappabschnitte 42, 44 sind die Abschnitte der Fahrzeugdachhälften 12, 14 zwischen dem dritten Gelenkabschnitt 40 und der Vorderkante des Fahrzeugdach 10. In Figur 6 ist dabei ein Zustand dargestellt, in dem der Umklappabschnitt 44 der linken Fahrzeugdachhälfte 14 nach vorn umgeklappt ist und auf dem verbleibenden Abschnitt der Fahrzeugdachhälfte 14 aufliegt. Die rechte Fahrzeugdachhälfte 12 ist dabei in einem Zustand dargestellt, in dem die komplette Fahrzeugdachhälfte 12 samt Umklappabschnitt 42 auf dem Fahrzeugheck 18 aufliegt.

Figur 7 zeigt eine Draufsicht des erfindungsgemäßen Fahrzeugdaches 10 gemäß dem zweiten Ausführungsbeispiel, in einem Zustand, in dem beide Hälften des Fahrzeugdaches 10 im geöffneten Zustand nach vorn geklappt sind. In diesem umgeklappten Zustand können die Fahrzeugdachhälften 12, 14 wahlweise in dieser Stellung arretiert werden, um zu verhindern, dass die Umklappabschnitte 42, 44 durch den Fahrtwind nach hinten zurückgeklappt werden. Diese Arretierung kann ähnlich der vorstehend beschriebenen Fixierung am Fahrzeugheck 18, mittels Magneten realisiert werden, die in das Material des Fahrzeugdaches integriert sind. Dabei ist zumindest ein Magnet in die Vorderkante einer Fahrzeugdachhälfte 12, 14 und zumindest ein Magnet in einen Abschnitt der Fahrzeugdachhälften 12, 14 integriert, der sich in der Nähe der Heckscheiben 20 befindet. Alternativ ist auch eine Arretierung mittels eines mechanischen Verriegelungsmechanismus möglich. Vorzugsweise ist die Innenfläche des Fahrzeugdaches 10 (Fläche, die im geschlossenen Zustand dem Fahrzeuginsassenraum zugewandt ist) mit Stoff, Leder usw. versehen. Diese Innenflächenverkleidung wird im zweiten Ausführungsbeispiel dadurch ermöglicht, dass die Innenfläche durch Vorklappen der Umklappabschnitte 42, 44 im geöffneten Zustand des Fahrzeugdaches 10 geschützt ist.

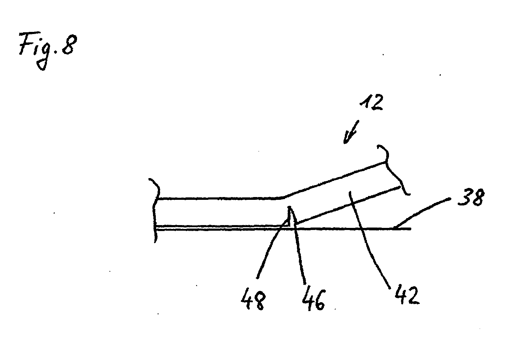

Figur 8 zeigt einen Schnitt der rechten Fahrzeugdachhälfte 12 im Bereich des dritten Gelenkabschnittes 40 gemäß dem zweiten Ausführungsbeispiel. Die Figur zeigt einen Zustand, in dem der Umklappabschnitt 42 leicht vorn Fahrzeugheck 18 bzw. vorn Bereich 38 des Fahrzeughecks 18 angehoben wird. Der dritte Gelenkabschnitt 40 ist so ausgebildet, dass er ausgehend von einem Zustand, in dem sich die zwei durch ihn verbundenen Abschnitte des Fahrzeugdaches 10 in einer Ebene befinden, den Abschnitten in eine Richtung eine Klappbewegung ermöglicht und in die entgegengesetzte Richtung eine Bewegung sperrt. Vorzugsweise ist der dritte Gelenkabschnitt 40 bezüglich der Richtung in Materialstärke des Fahrzeugdaches 10 auf der im geschlossenen Zustand dem Fahrzeuginsassenraum zugewandten Seite ausgebildet, so dass oberhalb des dritten Gelenkabschnittes 40 im geschlossenen Zustand des Fahrzeugdaches 10 (unterhalb in Figur 8) eine Flanke 46 des Umklappabschnittes 42 gegen eine gegenüberliegende Flanke 48 des gegenüberliegenden Dachabschnittes anstößt und das Fahrzeugdach 10 somit im geschlossenen Zustand gestützt wird.

Im vorgestellten bevorzugten Ausführungsbeispiel wird das Fahrzeugdach 10 manuell geöffnet und geschlossen. Das Fahrzeugdach 10 kann jedoch auch motorisch angetrieben geöffnet und geschlossen werden. Dazu könnten beispielsweise im Bereich des ersten, zweiten und dritten Gelenkabschnittes 24, 26 und 40, gegenüberliegend zu den Einkerbungen 32 in den Grundträgern 28, Elemente eingearbeitet sein, die sich wahlweise ausdehnen oder zusammenziehen.

Sowohl die Grundträger 28 als auch die Dachschicht 30 können zusätzlich zu den vorstehend beschriebenen Funktionen mit zusätzlichen Funktionen ausgestattet sein. Beispielsweise können kleine Aufbewahrungsboxen, Sonnenbrillenhalterungen oder sonstige Halterungen vorgesehen sein, die im geschlossenen Zustand des Fahrzeugdaches 10 von den Fahrzeugsitzen aus zugänglich sind.

Im vorstehenden Ausführungsbeispiel wurde das Fahrzeugdach 10 im Zusammenhang mit einem Cabriolet verwendet. Das erfindungsgemäße Prinzip ist jedoch auch bei einem Sonnendach anwendbar, bei dem nur ein verhältnismäßig kleiner Dachausschnitt freigelegt wird.

Im vorstehenden Ausführungsbeispiel ist das Fahrzeugdach 10 so ausgeführt, dass es in zwei Fahrzeugdachhälften 12 und 14 unterteilt ist. Jedoch ist diese Unterteilung nicht auf Hälften beschränkt und das Fahrzeugdach 10 kann ebenso in Längsrichtung in einen größeren und kleineren Dachabschnitt aufgeteilt sein. Außerdem muss das Fahrzeugdach nicht aufgeteilt sein, sondern kann ebenso komplett einstückig ausgebildet sein.

Die in der vorstehenden Beschreibung, in den Zeichnungen sowie in den Ansprüchen offenbarten Merkmale der Erfindung können sowohl einzeln als auch in beliebiger Kombination für die Verwirklichung der Erfindung wesentlich sein.

### Bezugszeichenliste:

- 10: Fahrzeugdach
- 12: Rechte Fahrzeugdachhälfte
- 14: Linke Fahrzeugdachhälfte
- 16: Windschutzscheibe
- 18: Fahrzeugheck
- 20: Heckscheibe
- 22: Sitzschalen
- 24: Erster Gelenkabschnitt
- 26: Zweiter Gelenkabschnitt
- 28: Grundträger
- 30: Dachschicht
- 32: Einkerbung
- 34: Kopfstütze
- 36: Fahrzeugheckvorderkante
- 38: Bereich des Fahrzeughecks
- 40: Dritter Gelenkabschnitt
- 42: Umklappabschnitt der rechten Fahrzeugdachhälfte
- 44: Umklappabschnitt der linken Fahrzeugdachhälfte
- 46: Flanke des Umklappabschnittes
- 48: Flanke

## Patentansprüche

1. Fahrzeugdach (10), welches das zumindest teilweise Freilegen eines Fahrzeuginsassenraumes ermöglicht, mit einem Grundgerüst, welches das Fahrzeugdach (10) zumindest abschnittsweise ausbildet und die Kontur des Fahrzeugdaches (10) im geschlossenen Zustand definiert, wobei das Grundgerüst zumindest einen Gelenkabschnitt (24) aufweist, um den ein zu öffnender Teil des Fahrzeugdaches umklappbar ist, **dadurch gekennzeichnet, dass** der Gelenkabschnitt (24) ein Abschnitt ist, an dem das Grundgerüst eine höhere Biegsamkeit als dem Gelenkabschnitt benachbarte Abschnitte aufweist.

2. Fahrzeugdach (10) gemäß Anspruch 1, **dadurch gekennzeichnet, dass** das Grundgerüst durch in Längsrichtung verlaufende, einstückige Grundträger (28) ausgebildet wird.

3. Fahrzeugdach (10) gemäß einem der vorhergehenden Ansprüche, **dadurch gekennzeichnet, dass** die höhere Biegsamkeit des Gelenkabschnittes (24) durch quer zur Längsrichtung des Fahrzeugdaches (10) verlaufende und dem Fahrzeuginsassenraum zugewandte Einkerbungen (32) bereitgestellt wird.

4. Fahrzeugdach (10) gemäß einem der vorhergehenden Ansprüche, **dadurch gekennzeichnet, dass** zumindest zwei Gelenkabschnitte (24, 26) vorgesehen sind, wobei sich ein Gelenkabschnitt (26) zwischen einem Oberdach und einem Dachheck, an dem eine Heckscheibe (20) anbringbar ist, und der andere Gelenkabschnitt (24) unterhalb eines Bereichs, an dem die Heckscheibe (20) anbringbar ist, befindet.

5. Fahrzeugdach (10) gemäß einem der vorhergehenden Ansprüche, **dadurch gekennzeichnet, dass** zusätzlich zum Grundgerüst eine Dachschicht (30) vorgesehen ist, die eine geringere Steifigkeit als das Grundgerüst aufweist.

6. Fahrzeugdach (10) gemäß einem der vorhergehenden Ansprüche, **dadurch gekennzeichnet, dass** das Fahrzeugdach (10) am Gelenkabschnitt (24) derart umgeklappt werden kann, dass in der geöffneten Stellung das Fahrzeugdach (10) ungefaltet auf dem Fahrzeugheck (18) abzulegen ist.

7. Fahrzeugdach (10) gemäß einem der vorhergehenden Ansprüche, **dadurch gekennzeichnet, dass** das Fahrzeugdach (10) in Längsrichtung in zwei Abschnitte geteilt ist.

8. Fahrzeugdach (10) gemäß einem der vorhergehenden Ansprüche, **dadurch gekennzeichnet, dass** ein weiterer Gelenkabschnitt vorgesehen ist, um das geöffnete Fahrzeugdach abschnittsweise in Fahrzeuglängsrichtung nach vorn umzuklappen.

9. Fahrzeug mit einem Fahrzeugdach (10) gemäß einem der vorhergehenden Ansprüche.

## Claims

1. Vehicle roof (10) allowing to uncover a vehicle occupant area at least partially, wherein the vehicle roof has a base frame which forms the vehicle roof (10) at least in sections and which defines the contour of the vehicle roof (10) in the closed state, wherein the base frame has at least one joint section (24) around which a part to be opened of the vehicle roof can be folded, **characterized in that** the joint section (24) is a section at which the base frame has a higher flexibility than sections adjacent to the joint section.

2. Vehicle roof (10) as set forth in claim 1, **characterized in that** the base frame is formed by one-piece base carriers (28) extending in the longitudinal direction.

3. Vehicle roof (10) as set forth in one of the preceding claims, **characterized in that** the higher flexibility of the joint section (24) is provided by notches (32) which extend transversely to the longitudinal direction of the vehicle roof (10) and which face the vehicle occupant area.

4. Vehicle roof (10) as set forth in one of the preceding claims, **characterized in that** at least two joint sections (24, 26) are provided, wherein one joint section (26) is located between an upper roof and a roof rear at which a rear screen (20) is mountable, and wherein the other joint section (24) is located beneath an area at which the rear screen (20) is mountable.

5. Vehicle roof (10) as set forth in one of the preceding claims, **characterized in that** a roof layer (30) is provided in addition to the base frame, the roof layer having a lower stiffness than the base frame.

6. Vehicle roof (10) as set forth in one of the preceding claims, **characterized in that** the vehicle roof (10) can be folded at the joint section (24) such that in the opened position the vehicle roof (10) is to be put down on the vehicle rear (18) in a non-folded state.

7. Vehicle roof (10) as set forth in one of the preceding claims, **characterized in that** the vehicle roof (10) is divided into two sections in the longitudinal direction.

8. Vehicle roof (10) as set forth in one of the preceding claims, **characterized in that** a further joint section is provided to fold the opened vehicle roof forward in a section-wise manner in the vehicle longitudinal direction.

9. Vehicle having a vehicle roof (10) as set forth in one of the preceding claims.

## Revendications

1. Toit de véhicule (10) permettant de dégager au moins partiellement une espace d'occupants de véhicule, le toit de véhicule comportant un châssis de base qui forme le toit de véhicule (10) au moins par sections et qui définit le contour du toit de véhicule (10) en état fermé, le châssis de base ayant au moins une section de liaison (24) autour de laquelle une partie à ouvrir du toit de véhicule peut être pliée, **caractérisé en ce que** la section de liaison (24) est une section dans laquelle le châssis de base présente une flexibilité qui est plus haute par rapport à des sections avoisinantes de la section de liaison.

2. Toit de véhicule (10) selon la revendication 1, **caractérisé en ce que** le châssis de base est formé par des potences de base en pièce unique (28) qui s'étendent en direction longitudinale.

3. Toit de véhicule (10) selon l'une des revendications précédentes, **caractérisé en ce que** la flexibilité plus haute de la section de liaison (24) est apportée par des entailles (32) qui s'étendent transversalement à la direction longitudinale du toit de véhicule (10) et qui sont orientées vers l'espace d'occupants de véhicule.

4. Toit de véhicule (10) selon l'une des revendications précédentes, **caractérisé en ce qu'**au moins deux sections de liaison (24, 26) sont prévues, une section de liaison (26) étant située entre un toit supérieur et une arrière de toit à laquelle peut être fixée une vitre arrière (20), l'autre section de liaison (24) étant située au-dessous d'une zone à laquelle peut être fixée la vitre arrière (20).

5. Toit de véhicule (10) selon l'une des revendications précédentes, **caractérisé en ce qu'**une couche de toit (30) est prévue en plus du châssis de base, la couche de toit ayant une raideur plus faible que le châssis de base.

6. Toit de véhicule (10) selon l'une des revendications précédentes, **caractérisé en ce que** le toit de véhicule (10) peut être plié à la section de liaison (24) de manière que dans la position ouverte le toit de véhicule (10) est à déposer sur l'arrière de véhicule (18) en état non-plié.

7. Toit de véhicule (10) selon l'une des revendications précédentes, **caractérisé en ce que** le toit de véhicule (10) est divisé en deux parties en direction longitudinale.

8. Toit de véhicule (10) selon l'une des revendications précédentes, **caractérisé en ce qu'**une autre section de liaison est prévue pour plier le toit de véhicule vers l'avant par sections dans la direction longitudinale du véhicule quand le toit de véhicule est ouvert.

9. Véhicule comportant un toit de véhicule (10) selon l'une des revendications précédentes.
